# EUROPÄISCHE PATENTSCHRIFT

(11) **EP 1 197 257 B1**
(45) Veröffentlichungstag und Bekanntmachung des Hinweises auf die Patenterteilung: **04.11.2009**
(21) Anmeldenummer: 01122823.6
(22) Anmeldetag: 22.09.2001
(51) Int. Cl.: B01D 53/22

(54) **Verfahren und Vorrichtung zur Erzeugung heisser Arbeitsgase**
Process and apparatus for production of hot feed gas
Procédé et dispositif pour la production de gaz d'alimentation chaud

(30) Priorität: 13.10.2000 US 239887 P; 21.03.2001 CH 5142001
(43) Veröffentlichungstag der Anmeldung: 17.04.2002
(73) Patentinhaber: Alstom Technology Ltd, 5400 Baden (CH)
(72) Erfinder: Griffin, Timothy Albert, Dr., 5408 Ennetbaden (CH); Winkler, Dieter, 79787 Lauchringen (DE); Linder, Ulf, Leicester LE2 2RA (GB)

(56) Entgegenhaltungen:
- EP-A- 0 882 486
- WO-A1-00/33942
- DE-C- 19 755 116
- US-A- 5 753 007

## Beschreibung

### Technisches Gebiet

Die Erfindung betrifft ein Verfahren sowie eine Vorrichtung zur Erzeugung von heißen Arbeitsgasen, insbesondere für eine Gasturbinenanlage, mit den Merkmalen des Oberbegriffes des Anspruchs 1 bzw. des Anspruchs 4.

### Stand der Technik

Aus der EP 0 882 486 A1 sind ein Verfahren sowie eine Vorrichtung der eingangs genannten Art bekannt. Die bekannte Vorrichtung besitzt einen Brenner, der an einer Eingangsseite mit Kraftstoff und mit sauerstoffhaltigem Gas versorgt wird. Im Brenner wird ein Verbrennungsgemisch aus dem sauerstoffhaltigen Gas und dem Kraftstoff verbrannt, wobei sich heißes Verbrennungsabgas bildet. Eine Ausgangsseite des Brenners ist an eine Abgasleitung angeschlossen, durch die das heiße Verbrennungsabgas aus dem Brenner austritt und zumindest teilweise als heißes Arbeitsgas in einem nachfolgenden Prozeß verwendbar ist. Die bekannte Vorrichtung weist außerdem eine Sauerstofftrenneinrichtung auf, die an einem ersten Eingang mit Verbrennungsabgas versorgt wird, das von der Abgasleitung abgezweigt wird. An einem zweiten Eingang wird diese Sauerstofftrenneinrichtung mit erwärmtem, sauerstoffhaltigem Gas versorgt. Die Sauerstofftrenneinrichtung weist Sauerstofftrennmittel auf, die Sauerstoff vom erwärmten, sauerstoffhaltigen Gas zum abgezweigten Verbrennungsabgas transportieren. An einem ersten Ausgang der Sauerstofftrenneinrichtung tritt dann mit Sauerstoff angereichertes Verbrennungsabgas aus, das als sauerstoffhaltiges Gas zur Versorgung der Eingangsseite des Brenners dient. Aus einem zweiten Ausgang der Sauerstofftrenneinrichtung tritt bezüglich seines Sauerstoffgehalts reduziertes heißes Gas aus, das in einem nachfolgenden Prozeß als heißes Arbeitsgas verwendbar ist. Bei der bekannten Vorrichtung dient das bezüglich seines Sauerstoffgehalts reduzierte heiße Gas dazu, das der Sauerstofftrenneinrichtung zugeführte sauerstoffhaltige Gas in einem Wärmetauscher zu erwärmen.

Grundsätzlich ist es jedoch auch möglich, die so erzeugten heißen Arbeitsgase beispielsweise in einer Gasturbinenanlage zur Erzeugung von elektrischer Energie zu verwenden. Durch die Anwendung einer derartigen Vorrichtung bzw. eines derartigen Verfahrens können bei der Energieerzeugung die Schadstoffemissionen, insbesondere die CO₂-Emissionen, bei der Verbrennung fossiler Kraftstoffe erheblich reduziert werden.

Der Kerngedanke dieser Verfahren und Vorrichtungen ist darin zu sehen, daß für die Verbrennung reiner Sauerstoff als Oxidationsmittel verwendet wird, da sich dadurch die Abgasnachbehandlung erheblich vereinfacht. Dies ist darauf zurückzuführen, daß ein Verbrennungsvorgang mit molekularem Sauerstoff ein Abgas liefert, das im wesentlichen nur aus CO₂ und H₂O besteht. Da Sauerstoff, der in Kälteanlagen erzeugt wird, sehr teuer ist, wurden neue Technologien zur Sauerstoffherstellung entwickelt. Hierbei sind Sauerstofftrenneinrichtungen von Bedeutung, die mit einer für Sauerstoffionen und für Elektronen leitenden Membran, sogenannte MCM-Membran (mixed conducting membrane), ausgestattet sind. Eine derartige MCM-Membran besitzt eine Rückhalteseite, auf der sich das sauerstoffhaltige Gas befindet, sowie eine Durchgangsseite, auf der sich das anzureichernde Gas befindet. Die MCM-Membran transportiert Sauerstoffionen von der Rückhalteseite auf die Durchgangsseite und bewirkt einen Elektronentransport von der Durchgangsseite zur Rückhalteseite. Hierdurch wird dem Gas auf der Rückhalteseite Sauerstoff entzogen und dem Gas auf der Durchgangsseite zugeführt. Um die Leistungsfähigkeit einer solchen MCM-Membran zu erhöhen, ist es vorteilhaft, auf der Durchgangsseite eine relativ hohe Strömungsgeschwindigkeit einzustellen, um die Sauerstoffkonzentration auf der Durchgangsseite möglichst niedrig zu halten. Für eine lange Lebensdauer der MCM-Membran ist es von Vorteil, die folgenden Verfahrensschritte unabhängig voneinander in separaten Einheiten durchzuführen: Erwärmen des sauerstoffhaltigen Gases, Transportieren des Sauerstoffs vom sauerstoffhaltigen Gas zum abgezweigten Verbrennungsabgas und Verbrennen des mit Sauerstoff angereicherten Verbrennungsabgases mit Kraftstoff. Durch die funktionale Trennung dieser Vorgänge können die einzelnen Verfahrensschritte separat optimiert werden, um den Wirkungsgrad der gesamten Vorrichtung zu erhöhen, wobei insbesondere die Lebensdauer der MCM-Membran erhöht werden kann. Bei anderen, weiter unten beschriebenen bekannten Vorrichtungen können die vorgenannten Vorgänge mehr oder weniger gleichzeitig in einem sogenannten Membran-Reaktor statt finden, der im wesentlichen einer Sauerstofftrenneinrichtung mit MCM-Membran entspricht, jedoch bei erheblich höheren Temperaturen betrieben wird.

Aus der WO 00/33942 ist ein Verfahren bekannt, bei dem in einer Vielzahl aufeinander folgender Stufen jeweils ein Verbrennungsabgas zunächst mit Sauerstoff angereichert und anschließend mit einem Brennstoff in einem Brenner umgesetzt wird. Anschließend wird das so gebildete neue Verbrennungsabgas über einen Wärmetauscher der nächsten Stufe zugeführt. Besagter Wärmetauscher dient dabei zur Vorwärmung eines sauerstoffhaltigen Gases, dem der Sauerstoff zur Anreicherung des jeweiligen Verbrennungsabgases innerhalb der jeweiligen Stufe entzogen wird.

Aus der US 5,753,007 ist ein Verfahren bekannt, bei dem Luft über einen Wärmetauscher einer Sauerstofftrenneinrichtung zugeführt wird, aus der dann sauerstoffarmes Gas und sauerstoffreiches Gas in getrennten Pfaden über den genannten Wärmetauscher abgeführt werden. Optional kann eine zusätzliche Aufheizung für die Luft vorgesehen sein, beispielsweise durch Verbrennen eines Brennstoffs.

Aus der nachveröffentlichten EP 1 181 968 A2 ist ein Verfahren bekannt, bei dem Luft vorgewärmt und einer Sauerstofftrenneinrichtung zugeführt wird. Die sauerstoffarme Luft wird gekühlt und über eine Turbine entspannt. Aus der Sauerstofftrenneinrichtung tritt ein sauerstoffreiches Gas aus, das zum Vorwärmen der Luft auf deren Weg zur Sauerstofftrenneinrichtung genutzt wird. Aus der US 5 976 223 ist eine Vorrichtung zur Herstellung von Kohlendioxid und Sauerstoff bekannt, die mit zwei Sauerstofftrenneinrichtungen arbeitet, die jeweils mit einer MCM-Membran ausgestattet sind. Bei der ersten Sauerstofftrenneinrichtung, die als Membran-Reaktor arbeitet, wird auf der Rückhalteseite der MCM-Membran komprimiertes, erhitztes und sauerstoffhaltiges Gas eingeleitet. Auf der Durchgangsseite wird ein gasförmiger Kraftstoff eingebracht, der mit dem zugeführten Sauerstoff reagiert und Wasser und Kohlendioxid bildet. Das bezüglich seines Sauerstoffgehaltes reduzierte sauerstoffhaltige Gas wird durch die dabei ablaufende exotherme Reaktion erhitzt. Das so erhitzte sauerstoffhaltige Gas wird dann der zweiten Sauerstofftrenneinrichtung auf deren Rückhalteseite zugeführt. Auf der Durchgangsseite dieser zweiten Sauerstofftrenneinrichtung sammelt sich dann der gewünschte Sauerstoff.

In der WO 98/55394 ist ein Verfahren beschrieben, bei dem eine mit einer MCM-Membran arbeitende Sauerstofftrenneinrichtung als Membran-Reaktor verwendet wird, um heiße Verbrennungsabgase für eine Gasturbinenanlage herzustellen. Hierbei wird Umgebungsluft komprimiert, erhitzt und der Rückhalteseite des Membran-Reaktors zugeführt. Der Durchgangsseite wird ein Gemisch aus rückgeführtem Abgas und Kraftstoff zugeleitet. Im Membran-Reaktor wird dann der zugeführten Luft Sauerstoff entzogen und dem Gemisch zugeführt. Auf der Durchgangsseite reagiert dann der Kraftstoff mit dem Sauerstoff auf der Membran-Oberfläche, die mit einem Oxidationskatalysator beschichtet ist. Die so gebildeten heißen Abgase werden dann einer Turbine zugeführt.

Aus der WO 98/55208 ist ein weiteres Verfahren zu Herstellung heißer Verbrennungsabgase zum Betrieb einer Turbine bekannt, bei dem verdichtete Frischluft in einem ersten Brenner erhitzt und der Rückhalteseite einer mit einer MCM-Membran arbeitenden Sauerstofftrenneinrichtung zugeführt wird. Rückgeführtes Abgas wird zusammen mit Kraftstoff einem zweiten Brenner zugeführt, der als Katalysator ausgebildet sein kann. Die dort erzeugten Verbrennungsabgase werden dann der Durchgangsseite der Sauerstofftrenneinrichtung zugeleitet, wo sie mit Sauerstoff angereichert werden. Die mit Sauerstoff angereicherten Abgase werden dann einem dritten Brenner zugeführt und dort mit Kraftstoff verbrannt um heiße Verbrennungsabgase zu erzeugen, die eine Turbine antreiben.

### Darstellung der Erfindung

Die vorliegende Erfindung beschäftigt sich mit dem Problem, für ein Verfahren bzw. für eine Vorrichtung der eingangs genannten Art eine Ausführungsform anzugeben, die einen erhöhten Wirkungsgrad besitzt.

Erfindungsgemäß wird dieses Problem durch ein Verfahren mit den Merkmalen des Anspruchs 1 gelöst. Die Erfindung beruht auf dem allgemeinen Gedanken, die mit Sauerstoff angereicherten, heißen Verbrennungsabgase nach ihrem Austritt aus der Sauerstofftrenneinrichtung zur Erwärmung der sauerstoffhaltigen Gase zu verwenden, bevor diese der Sauerstofftrenneinrichtung zugeführt werden. Durch diese Maßnahme kann die Eintrittstemperatur der sauerstoffhaltigen Gase beträchtlich erhöht werden, ohne daß von außen Energie in das System eingebracht werden muß. Gleichzeitig kann für das abgekühlte, mit Sauerstoff angereicherte Verbrennungsabgas der Massenstrom erhöht werden. Des weiteren ist die Verwendung herkömmlicher, mechanisch arbeitender Verdichter oder Pumpen möglich, um die dem Brenner zugeführten, mit Sauerstoff angereicherten Verbrennungsabgase anzutreiben. Durch die Ausnutzung der ohnehin vorhandenen Energie zur Erwärmung des sauerstoffhaltigen Gases, kann der Wirkungsgrad des Verfahrens erhöht werden. Um die Wärme des mit Sauerstoff angereicherten Abgases zum Vorwärmen des sauerstoffhaltigen Gases zu nutzen, wird wein Wärmetauscher verwendet, wobei zum Antreiben des angereicherten Abgases ein stromab des Wärmetauschers angeordneter Verdichter oder Gebläse vorgesehen ist.

Das der Erfindung zugrundeliegende Problem wird auch durch eine Vorrichtung mit den Merkmalen des Anspruchs 4 gelöst. Die Erfindung beruht hierbei auf dem allgemeinen Gedanken, zur Erwärmung der sauerstoffhaltigen Gase einen Wärmetäuscher zu verwenden, der einerseits vom zu erwärmenden, sauerstoffhaltigen Gas und andererseits von dem aus der Sauerstofftrenneinrichtung austretenden, mit Sauerstoff angereicherten Verbrennungsabgas durchströmt wird. Die gewünschte Temperaturerhöhung des sauerstoffhaltigen Gases geht dann mit einer zweckmäßigen Temperaturabsenkung des mit Sauerstoff angereicherten Verbrennungsabgases einher. Wie oben erläutert, kann dadurch der Wirkungsgrad bei der Herstellung der heißen Arbeitsgase erhöht werden.

Bei einer besonders vorteilhaften Weiterbildung kann die Sauerstofftrenneinrichtung eine erste Kammer und eine zweite Kammer besitzen, wobei die Sauerstofftrennmittel eine Membran aufweisen, welche die beiden Kammern voneinander trennt und Sauerstoff von der einen Kammer in die andere Kammer transportiert, wobei beide Kammern gleichgerichtet und parallel zur Membran durchströmt werden. Dementsprechend durchströmen das abgezweigte Verbrennungsabgas und das erwärmte sauerstoffhaltige Gas die Sauerstofftrenneinrichtung nach dem Gleichstromprinzip. Bei diesem Aufbau sowie bei dieser Betriebsweise kommt es in der Membran zu einem flachen Temperaturprofil und zwar sowohl in Strömungsrichtung als auch quer dazu. Diese Merkmale reduzieren die resultierenden thermischen Spannungen in der Membran, wodurch sich deren Lebensdauer erhöht.

Weitere wichtige Merkmale und Vorteile der Erfindung ergeben sich aus den Unteransprüchen, aus den Zeichnungen und aus der zugehörigen Figurenbeschreibung anhand der Zeichnungen.

### Kurze Beschreibung der Zeichnungen

Bevorzugte Ausführungsbeispiele der Erfindung sind in den Zeichnungen dargestellt und werden in der nachfolgenden Beschreibung näher erläutert. Es zeigen, jeweils schematisch
- Fig. 1: eine schaltplanartige Prinzipdarstellung einer erfindungsgemäßen Vorrichtung und
- Fig. 2: eine schaltplanartige Prinzipdarstellung einer Gasturbinenanlage, die eine erfindungsgemäße Vorrichtung enthält.

### Wege zur Ausführung der Erfindung

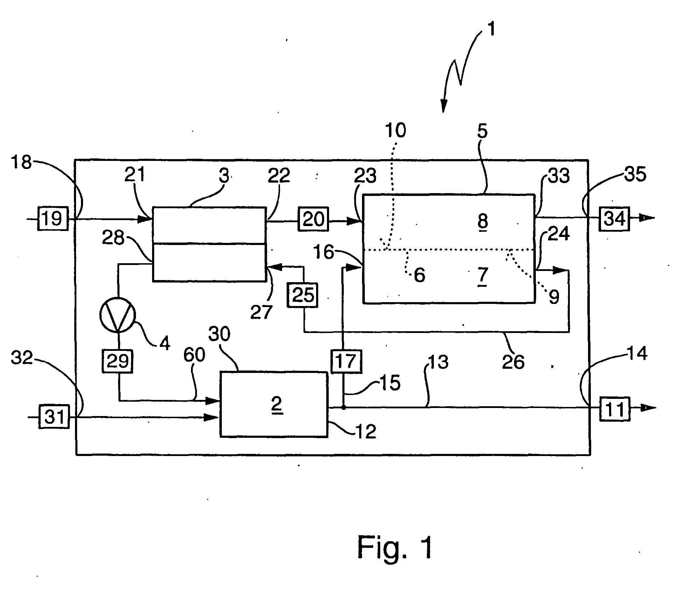

Entsprechend Fig. 1 besitzt eine Vorrichtung 1, die hier durch einen Rahmen symbolisiert ist, einen Brenner 2, einen Wärmetauscher 3, einen Verdichter 4 und eine Sauerstofftrenneinrichtung 5. Diese Sauerstofftrenneinrichtung 5 weist als Sauerstofftrennmittel eine MCM-Membran 6 auf, die hier durch eine punktierte Linie symbolisiert ist. Diese MCM-Membran 6 trennt in der Sauerstofftrenneinrichtung 5 eine erste Kammer 7 von einer zweiten Kammer 8, wobei der ersten Kammer 7 eine Durchgangsseite 9 und der zweiten Kammer 8 eine Rückhalteseite 10 der Membran 6 zugeordnet ist.

Im Brenner 2 findet eine Verbrennung statt, die heiße Verbrennungsabgase 11 erzeugt, die an einer Ausgangsseite 12 des Brenners 2 in eine damit verbundene Abgasleitung 13 eintreten. Bei 14 werden die gewünschten heißen Verbrennungsabgase 11 aus der Vorrichtung 1 herausgeführt. Diese heißen Verbrennungsabgase 11 können als heiße Arbeitsgase in einem nachfolgenden Prozeß verwendet werden.

Von der Abgasleitung 13 zweigt eine Rückführungsleitung 15 ab, die an einen ersten Eingang 16 der Sauerstofftrenneinrichtung 5 angeschlossen ist. Durch diesen ersten Eingang 16 kann abgezweigtes Abgas 17 in die erste Kammer 7, also auf die Durchgangsseite 9 der Membran 6 gelangen.

Bei 18 tritt sauerstoffhaltiges Gas 19, z.B. Luft, in die Vorrichtung 1 ein und wird dort einem ersten Eingang 21 des Wärmetauschers 3 zugeführt. Im Wärmetauscher 3 wird das sauerstoffhaltige Gas 19 erwärmt, so daß aus einem ersten Ausgang 22 des Wärmetauschers 3 erwärmtes sauerstoffhaltiges Gas 20 austritt. Der erste Ausgang 22 des Wärmetauschers 3 ist mit einem zweiten Eingang 23 der Sauerstofftrenneinrichtung 5 verbunden, so daß das erwärmte, sauerstoffhaltige Gas 20 in die zweite Kammer 8 also an der Rückhalteseite 10 der Membran 6 eintritt. Die MCM-Membran 6 bewirkt nun einen Transport von Sauerstoff von der Rückhalteseite 10 zur Durchgangsseite 9. Dabei wird dem zugeführten sauerstoffhaltigen Gas 20 Sauerstoff entzogen, wodurch sich dessen Sauerstoffgehalt reduziert. Gleichzeitig wird dem abgezweigten Abgas 17 Sauerstoff zugeführt, wodurch dieses mit Sauerstoff angereichert wird. An einem ersten Ausgang 24 der Sauerstofftrenneinrichtung 5 tritt dementsprechend mit Sauerstoff angereichertes, abgezweigtes Abgas 25 aus der ersten Kammer 7 aus und wird über eine Leitung 26 einem zweiten Eingang 27 des Wärmetauschers 3 zugeführt. Im Wärmetauscher 3 wird das mit Sauerstoff angereicherte, rückgeführte Abgas 25 gekühlt. Aus einem zweiten Ausgang 28 des Wärmetauschers 3 tritt dementsprechend gekühltes, mit Sauerstoff angereichertes Abgas 29 aus. Als Antrieb für die Strömung des abgezweigten Abgases 17, 25, 29 dient der Verdichter 4. Da das dem Verdichter 4 zugeführte Gas eine relativ niedrige Temperatur von z.B. weniger als 800°C aufweist, kann der Verdichter 4 als mechanischer Verdichter oder Kompressor oder Pumpe oder Gebläse ausgebildet sein.

Das abgekühlte, angereicherte Abgas 29 wird über eine Zuführungsleitung 60, in der der Verdichter 4 angeordnet ist, einer Eingangsseite 30 des Brenners 2 zugeführt. Der Eingangsseite 30 des Brenners 2 wird außerdem Kraftstoff oder ein Kraftstoff-Dampf-Gemisch 31 zugeführt, das bei 32 in die Vorrichtung 1 gelangt. Im Brenner 2 bildet sich dann ein Verbrennungsgemisch aus den mit Sauerstoff angereicherten, rückgeführten Abgasen 29 und dem zugeführten Kraftstoff 31.

Dieses Verbrennungsgemisch verbrennt im Brenner 2, wodurch die gewünschten heißen Verbrennungsabgase 11 entstehen.

Aus einem zweiten Ausgang 33 der Sauerstofftrenneinrichtung 5 tritt sauerstoffhaltiges Gas 34 aus, das nunmehr einen reduzierten Sauerstoffgehalt besitzt.

Die Temperatur der erwärmten, sauerstoffhaltigen Gase 20 reicht nicht aus, um einen ordnungsgemäßen Sauerstofftransport durch die Membran 6 zu gewährleisten. Eine geeignete Erwärmung der Membran 6 wird dadurch erreicht, daß die rückgeführten bzw. abgezweigten Abgase 17 relativ ungekühlt der Sauerstofftrenneinrichtung 5 zugeführt werden. Bei der Durchströmung der Kammern 7 und 8 dient die Membran 6 außerdem als Wärmeübertragungsmittel, das eine Abkühlung der Gase in der ersten Kammer 7 und eine Erwärmung der Gase in der zweiten Kammer 8 bewirkt. Dementsprechend ist das bei 35 aus der Vorrichtung 1 austretende sauerstoffhaltige Gas 34 relativ heiß. Auch dieses heiße, sauerstoffhaltige Gas 34 kann daher als Arbeitsgas verwendet werden.

Von besonderer Bedeutung ist hier, daß die beiden Kammern 7 und 8 gleichgerichtet durchströmt werden, wodurch Temperaturspannungen in der Membran 6 möglichst gering sind. An der Eingangsseite der Sauerstofftrenneinrichtung 5 liegt die Temperatur der Membran 6 zwischen der höheren Temperatur der rückgeführten Abgase 17 und der niedrigeren Temperatur der erwärmten sauerstoffhaltigen Gase 20. Bis zum Austritt aus der Sauerstofftrenneinrichtung 5 gleichen sich die Temperaturen von Membran 6, Abgas 17 und Gas 20 aneinander an.

Bei der erfindungsgemäßen Vorrichtung 1 ist von besonderer Bedeutung, daß die Erwärmung des sauerstoffhaltigen Gases 19 mit Hilfe der rückgeführten bzw. abgezweigten Abgase 25 erfolgt, da dadurch im Prozeß enthaltende Wärmeenergie in vorteilhafter Weise genutzt werden kann. Dabei bildet die Vorrichtung 1 eine durch den Rahmen symbolisierte Einheit, in die an den Eintrittsstellen 18 und 32 sauerstoffhaltige Luft 19 bzw. Kraftstoff 31 eintritt und aus der an den Austrittsstellen 14 und 35 heiße Arbeitsgase, nämlich heiße Verbrennungsabgase 11 und heiße sauerstoffhaltige Gase 34, austreten. Die einzelnen Funktionen innerhalb dieser Vorrichtung 1, wie z.B. das Erwärmen des sauerstoffhaltigen Gases 19 im Wärmetauscher 3, der Transport des Sauerstoffs in der Sauerstofftrenneinrichtung 5 sowie die Verbrennung des Verbrennungsgemischs in Brenner 2 können dabei unabhängig voneinander optimiert werden, um den Gesamtwirkungsgrad der Vorrichtung 1 zu erhöhen. Außer an den Eintrittsstellen 18 und 32 sowie an den Austrittsstellen 14 und 35 steht die Vorrichtung 1 in keinerlei Wechselwirkung mit vorausgehenden oder nachfolgenden Prozessen. Dementsprechend kann die Optimierung der innerhalb der Vorrichtung 1 ablaufenden Prozesse unabhängig von den vorausgehenden bzw. nachfolgenden Prozessen durchgeführt werden, wodurch sich die Optimierung der Vorrichtung 1 erheblich vereinfacht.

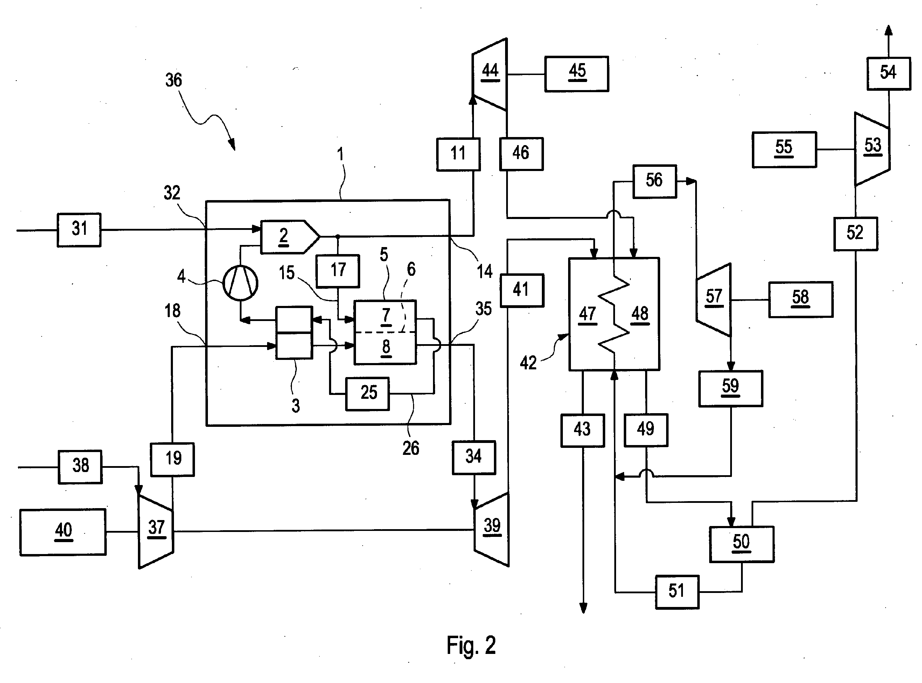

Entsprechend Fig. 2 kann die erfindungsgemäße Vorrichtung 1 in eine Gasturbinenanlage 36 integriert sein, die zur Stromgewinnung dient. In Fig. 2 wird deutlich, wie die Eintrittsstellen 18 und 32 sowie die Austrittsstellen 14 und 35 quasi Schnittstellen bilden, mit denen die erfindungsgemäße Vorrichtung 1 in die Gasturbinenanlage 36 eingebunden ist.

Ein Verdichter 37 komprimiert Umgebungsluft 38, wobei diese gleichzeitig erwärmt wird. Die komprimierte und erwärmte Umgebungsluft bildet das sauerstoffhaltige Gas 19, das bei 18 der Vorrichtung 1 zugeführt wird. In der Vorrichtung 1 wird die zugeführte Luft 19 bezüglich ihres Sauerstoffgehalts reduziert, was bei Luft auch einer Anhebung des Stickstoffgehalts entspricht. Die erhitzte, sauerstoffarme Luft 34 tritt bei 35 aus der Vorrichtung 1 aus und wird einer Turbine 39 zugeführt, die mit dem Verdichter 37 und einem Generator 40 zur Stromerzeugung verbunden ist. Das der Turbine 39 zugeführte Gas 34 wird in der Turbine 39 entspannt und bildet eine entspannte Strömung 41, deren Wärme in einem Dampferzeuger 42 zumindest teilweise zurückgewonnen wird. Aus dem Dampferzeuger 42 tritt dann gekühltes, sauerstoffarmes Gas 43 aus, das dann weiterbehandelt werden kann.

Bei 32 wird der Vorrichtung 1 Kraftstoff oder Kraftstoff-Dampf-Gemisch 31 zugeführt, wobei dieser Kraftstoff 31 im Inneren der Vorrichtung 1 - wie oben beschrieben - mit dem Sauerstoff des sauerstoffhaltigen Gases 19 verbrennt. Die daraus resultierende Verbrennung erzeugt im wesentlichen nur noch CO₂ und H₂O und bildet die gewünschten heißen Verbrennungsabgase 11, welche die Vorrichtung 1 bei 14 verlassen. Die heißen Verbrennungsabgase 11 werden in einer Turbine 44 entspannt, die einen weiteren Generator 45 zur Stromerzeugung antreibt. Dabei bilden sich entspannte Verbrennungsabgase 46, die ebenfalls dem Dampferzeuger 42 zugeführt werden. Dabei enthält der Dampferzeuger 42 zwei voneinander getrennte Kammern 47 und 48 für die entspannten, sauerstoffarmen Gase 41 und für die entspannten Verbrennungsabgase 46. Aus dem Dampferzeuger 42 tritt nunmehr gekühltes Verbrennungsabgas 49 aus, das einem Kühler 50 zugeführt werden kann, in dem Wasserdampf kondensiert wird. Dabei sich bildendes Wasser 51 wird wieder dem Dampferzeuger 42 zugeführt. Das übrigbleibende CO₂ 52 verlässt den Kühler 50 und kann in einem Verdichter 53 komprimiert und gegebenenfalls verflüssigt werden. Das komprimierte und/oder flüssige CO₂ 54 kann dann weiter verarbeitet werden. Der Verdichter 53 wird beispielsweise durch einen Motor 55 angetrieben. Ebenso ist eine Kopplung zum Beispiel mit der Turbine 44 denkbar.

Der vom Dampferzeuger 42 erzeugte Dampf 56 kann in einer Turbine 57 entspannt werden, die einen weiteren Generator 58 zur Stromerzeugung antreibt. Der entspannte Dampf kann dann in einem Kondensator 59 kondensieren; das dabei gebildete Wasser kann anschließend in den Dampferzeuger 42 eingeleitet werden. Darüber hinaus ist es möglich, den Dampf 56 als Prozessdampf für andere Zwecke zu verwenden, beispielsweise kann der Dampf 56 dem Kraftstoff 31 zugemischt werden, um ein Kraftstoff-Dampf-Gemisch zu bilden.

Bei der in Fig. 2 dargestellten Gasturbinenanlage 36 kann somit unter Verbrennung fossiler Brennstoffe Energie erzeugt werden, ohne dass Schadstoffe wie CO2, CO, NOx in die Umgebung gelangen. Ermöglicht wird dies durch die Vorrichtung 1, die heiße Arbeitsgase 11 und 34 bereitstellt, die entweder keine Schadstoffe enthalten oder so zusammengesetzt sind, dass sie besonders einfach von den Schadstoffen befreit werden können.

### Bezugszeichenliste

- 1: Vorrichtung
- 2: Brenner
- 3: Wärmetauscher
- 4: Verdichter
- 5: Sauerstofftrenneinrichtung
- 6: Sauerstofftrennmittel, MCM-Membran
- 7: erste Kammer von 5
- 8: zweite Kammer von 5
- 9: Durchgangsseite von 6
- 10: Rückhalteseite von 6
- 11: heißes Verbrennungsabgas
- 12: Ausgangsseite von 2
- 13: Abgasleitung
- 14: Austrittsstelle von 1
- 15: Rückführungsleitung
- 16: erster Eingang von 5
- 17: abgezweigtes Abgas
- 18: Eintrittsstelle von 1
- 19: sauerstoffhaltiges Gas
- 20: erwärmtes sauerstoffhaltiges Gas
- 21: erster Eingang von 3
- 22: erster Ausgang von 3
- 23: zweiter Eingang von 5
- 24: erster Ausgang von 5
- 25: mit Sauerstoff angereichertes, abgezweigtes Abgas
- 26: Leitung
- 27: zweiter Eingang von 3
- 28: zweiter Ausgang von 3
- 29: gekühltes, mit Sauerstoff angereichertes, abgezweigtes Abgas
- 30: Eingangsseite von 2
- 31: Kraftstoff/Kraftstoff-Dampf-Gemisch
- 32: Eintrittsstelle von 1
- 33: zweiter Ausgang von 5
- 34: heißes, bezüglich seines Sauerstoffgehaltes reduziertes Gas
- 35: Austrittsstelle von 1
- 36: Gasturbinenanlage
- 37: Verdichter
- 38: Umgebungsluft
- 39: Turbine
- 40: Generator
- 41: entspanntes, heißes, sauerstoffarmes Gas
- 42: Dampferzeuger
- 43: gekühltes, sauerstoffarmes Gas
- 44: Turbine
- 45: Generator
- 46: entspanntes Verbrennungsabgas
- 47: erste Kammer von 42
- 48: zweite Kammer von 42
- 49: gekühltes Verbrennungsabgas
- 50: Kühler
- 51: Wasser
- 52: CO₂-Gas
- 53: Verdichter
- 54: verdichtetes und/oder flüssiges CO₂
- 55: Motor
- 56: Dampf
- 57: Turbine
- 58: Generator
- 59: Kondensator
- 60: Zuführungsleitung

## Patentansprüche

1. Verfahren zur Erzeugung heißer Arbeitsgase, insbesondere für eine Gasturbinenanlage,
- wobei in einem Brenner (2) eine Verbrennung stattfindet, die heißes Verbrennungsabgas (11) erzeugt, das zumindest teilweise als heißes Arbeitsgas verwendbar ist,
- wobei ein Teil (17) des Verbrennungsabgases (11) abgezweigt und einer Sauerstofftrenneinrichtung (5) zugeführt wird,
- wobei sauerstoffhaltiges Gas (19) erwärmt wird, um erwärmtes sauerstoffhaltiges Gas (20) zu bilden,
- wobei das erwärmte sauerstoffhaltige Gas (20) ebenfalls der Sauerstofftrenneinrichtung (5) zugeführt wird,
- wobei die Sauerstofftrenneinrichtung (5) Sauerstofftrennmittel (6) aufweist, die dem heißen sauerstoffhaltigen Gas (20) Sauerstoff entnehmen und dem abgezweigten Abgas (17) zuführen,
- wobei bezüglich seines Sauerstoffgehalts reduziertes, heißes Gas (34) die Sauerstofftrenneinrichtung (5) verlässt,
- wobei mit Sauerstoff angereichertes, abgezweigtes Abgas (25) sowie ein Kraftstoff (31) oder ein Kraftstoff-Dampf-Gemisch dem Brenner (2) zugeführt werden und ein Verbrennungsgemisch bilden, das im Brenner (2) unter Ausbildung des heißen Verbrennungsabgases (11) verbrennt, das den Brenner (2) verlässt und als heißes Arbeitsgas verwendbar ist,
**dadurch gekennzeichnet,**
- **dass** das mit Sauerstoff angereicherte, abgezweigte Abgas (25), bevor es dem Brenner (2) zugeführt wird, mittels eines Wärmetauschers (3) zur Erhitzung des sauerstoffhaltigen Gases (19) verwendet wird,
- **dass** das mit Sauerstoff angereicherte, abgezweigte Abgas (25) dem Brenner (2) mittels eines stromab des Wärmetauschers (3) angeordneten Verdichters oder Gebläses (4) dem Brenner (2) zugeführt wird.

2. Verfahren nach Anspruch 1,
**dadurch gekennzeichnet,**
**dass** das mit Sauerstoff angereicherte, abgezweigte Abgas (25) und das sauerstoffhaltige Gas (19) den Wärmetauscher (3) nach dem Gegenstrom-Prinzip durchströmen.

3. Verfahren nach Anspruch 1 oder 2,
**dadurch gekennzeichnet,**
**dass** das abgezweigte Abgas (17) und das erwärmte, sauerstoffhaltige Gas (20) die Sauerstofftrenneinrichtung (5) nach dem Gleichstrom-Prinzip durchströmen.

4. Vorrichtung zur Erzeugung heißer Arbeitsgase, insbesondere für eine Gasturbinenanlage,
4.1. mit einem Brenner (2),
4.1.1. der an einer Eingangsseite (30) mit Kraftstoff (31) oder Kraftstoff-Dampf-Gemisch und mit sauerstoffhaltigem Gas (29) versorgt wird,
4.1.2. in dem ein Verbrennungsgemisch aus sauerstoffhaltigem Gas (29) und Kraftstoff (31) oder Kraftstoff-Dampf-Gemisch verbrennt und heißes Verbrennungsabgas (11) bildet,
4.1.3. der an seiner Ausgangsseite (12) an eine Abgasleitung (13) angeschlossen ist, durch die das heiße Verbrennungsabgas (11) aus dem Brenner (2) austritt und zumindest teilweise als heißes Arbeitsgas verwendbar ist,
4.2 mit einer Sauerstofftrenneinrichtung (5),
4.2.1. die an einem ersten Eingang (16) mit heißem Verbrennungsabgas (17) versorgt wird, das von der Abgasleitung (13) abgezweigt wird,
4.2.2. die an einem zweiten Eingang (23) mit erwärmtem sauerstoffhaltigem Gas (20) versorgt wird,
4.2.3 die Sauerstofftrennmittel (6) aufweist, die Sauerstoff vom erwärmten sauerstoffhaltigen Gas (20) zum abgezweigten Verbrennungsabgas (17) transportieren,
4.2.4 die einen ersten Ausgang (24) aufweist, aus dem mit Sauerstoff angereichertes Verbrennungsabgas (25) zur Versorgung der Eingangsseite (30) des Brenners (2) austritt,
4.2.5 die einen zweiten Ausgang (33) aufweist, aus dem bezüglich seines Sauerstoffgehalts reduziertes heißes Gas (34) austritt, das als heißes Arbeitsgas verwendbar ist,
4.3. mit einem Wärmetauscher (3),
4.3.1. in den an einem ersten Eingang (21) relativ kaltes sauerstoffhaltiges Gas (19) eintritt,
4.3.2. aus dem an einem ersten Ausgang (22) erwärmtes sauerstoffhaltiges Gas (20) zur Versorgung des zweiten Eingangs (23) der Sauerstofftrenneinrichtung (5) austritt,
4.3.3. wobei der erste Ausgang (22) des Wärmetauschers (3) mit dem zweiten Eingang (23) der Sauerstofftrenneinrichtung (5) verbunden ist,
**dadurch gekennzeichnet, dass**
- der Wärmetauscher (3) einen zweiten Eingang (27) aufweist, der mit dem ersten Ausgang (24) der Sauerstofftrenneinrichtung (5) verbunden ist,
- der Wärmetauscher (3) einen zweiten Ausgang (28) aufweist, aus dem gekühltes, mit Sauerstoff angereichertes Verbrennungsabgas (29) zur Versorgung des Brenners (2) austritt,
- der zweite Ausgang (28) des Wärmetauschers (3) über eine Zuführungsleitung (60) mit der Eingangsseite (30) des Brenners (2) verbunden ist,
- in dieser Zuführungsleitung (60) ein Verdichter oder Gebläse (4) angeordnet ist.

5. Vorrichtung nach Anspruch 4,
**dadurch gekennzeichnet,**
**dass** der Wärmetauscher (3) als Zwei-Kreis-Wärmetauscher ausgebildet und so angeschlossen ist, dass das mit Sauerstoff angereicherte Verbrennungsabgas (25) und das sauerstoffhaltige Gas (19) den Wärmetauscher (3) nach dem Gegenstromprinzip durchströmen.

6. Vorrichtung nach Anspruch 4 oder 5,
**dadurch gekennzeichnet,**
**dass** die Sauerstofftrenneinrichtung (5) eine erste Kammer (7) und eine zweite Kammer (8) aufweist und dass die Sauerstofftrennmittel eine Membran (6) aufweisen, welche die beiden Kammern (7, 8) voneinander trennt und Sauerstoff von der einen Kammer (8) in die andere Kammer (7) transportiert, wobei beide Kammern (7, 8) gleichgerichtet und parallel zur Membran (6) durchströmt werden.

## Claims

1. Method for producing hot working gases, in particular for a gas turbine system,
- wherein combustion takes place in a burner (2), which creates the hot combustion waste gas (11) which can be used at least partially as hot working gas,
- wherein some (17) of the combustion waste gas (11) is branched off and is fed to an oxygen separation device (5),
- wherein oxygen-containing gas (19) is heated in order to form heated, oxygen-containing gas (20),
- wherein the heated oxygen-containing gas (20) is also fed to the oxygen separation device (5),
- wherein the oxygen separation device (5) has oxygen separation means (6) which removes oxygen from the hot oxygen-containing gas (20) and feeds the oxygen to the branched-off waste gas (17),
- wherein hot gas (34), which is reduced with regard to its oxygen content, leaves the oxygen separation device (5),
- wherein oxygen-enriched, branched-off waste gas (25), and also a fuel (31) or a fuel/steam mixture are fed to the burner (2) and form a combustion mixture which is combusted in the burner (2), forming the hot combustion waste gas (11), which leaves the burner (2) and can be used as hot working gas,
**characterized in that**
- the oxygen-enriched, branched-off waste gas (25), before it is fed to the burner (2), by means of a heat exchanger (3) is used for heating the oxygen-containing gas (19),
- the oxygen-enriched, branched-off waste gas (25) is fed to the burner (2) by means of a compressor or fan (4) which is arranged downstream of the heat exchanger (3).

2. Method according to Claim 1,
**characterized in that**
the oxygen-enriched, branched-off waste gas (25) and the oxygen-containing gas (19) flow through the heat exchanger (3) according to the counterflow principle.

3. Method according to Claim 1 or 2,
**characterized in that**
the branched-off waste gas (17) and the heated oxygen-containing gas (20) flow through the oxygen separation device (5) according to the parallel-flow principle.

4. Device for producing hot working gases, in particular for a gas turbine system,
4.1 with a burner (2),
4.1.1 which on an inlet side (30) is supplied with fuel (31), or fuel/steam mixture, and with oxygen-containing gas (29),
4.1.2 in which a combustion mixture which consists of oxygen-containing gas (29) and fuel (31), or fuel/steam mixture, combusts and forms hot combustion waste gas (11),
4.1.3 which on its outlet side (12) is connected to a waste gas line (13) through which the hot combustion waste gas (11) discharges from the burner (2) and can be used at least partially as hot working gas,
4.2 with an oxygen separation device (5),
4.2.1 which at a first inlet (16) is supplied with hot combustion waste gas (17) which is branched off from the waste gas line (13),
4.2.2 which at a second inlet (23) is supplied with heated oxygen-containing gas (20),
4.2.3 which has oxygen separation means (6) which transport oxygen from the heated oxygen-containing gas (20) to the branched-off combustion waste gas (17),
4.2.4 which has a first outlet (24) from which oxygen-enriched combustion waste gas (25) discharges for supplying the inlet side (30) of the burner (2),
4.2.5 which has a second outlet (33) from which hot gas (34), which is reduced with regard to its oxygen content, discharges, and which can be used as hot working gas,
4.3 with a heat exchanger (3),
4.3.1 into which at a first inlet (21) relatively cold oxygen-containing gas (19) enters,
4.3.2 from which at a first outlet (22) heated oxygen-containing gas (20) discharges for supplying the second inlet (23) of the oxygen separation device (5),
4.3.3 wherein the first outlet (22) of the heat exchanger (3) is connected to the second inlet (23) of the oxygen separation unit (5),
**characterized in that**
- the heat exchanger (3) has a second inlet (27) which is connected to the first outlet (24) of the oxygen separation device (5),
- the heat exchanger (3) has a second outlet (28) from which cooled, oxygen-enriched combustion waste gas (29) discharges for supplying the burner (2),
- the second outlet (28) of the heat exchanger (3) is connected to the inlet side (30) of the burner (2) via a supply line (60),
- a compressor or fan (4) is arranged in this supply line (60).

5. Device according to Claim 4,
**characterized in that**
the heat exchanger (3) is formed as a dual-cycle heat exchanger and is connected so that the oxygen-enriched combustion waste gas (25) and the oxygen-containing gas (19) flow through the heat exchanger (3) according to the counterflow principle.

6. Device according to Claim 4 or 5,
**characterized in that**
the oxygen separation device (5) has a first chamber (7) and a second chamber (8), and **in that** the oxygen separation means have a membrane (6) which separates the two chambers (7, 8) from each other, wherein the two chambers (7, 8) are exposed to throughflow equidirectionally and parallel to the membrane (6).

## Revendications

1. Procédé pour produire des gaz de travail chauds, en particulier pour une installation de turbine à gaz,
- dans lequel une combustion a lieu dans un brûleur (2), laquelle produit du gaz d'échappement de combustion chaud (11), qui peut être utilisé au moins en partie sous forme de gaz de travail chaud,
- une partie (17) du gaz d'échappement de combustion (11) étant déviée et alimentée à un dispositif de séparation d'oxygène (5),
- du gaz contenant de l'oxygène (19) étant chauffé pour former du gaz chauffé contenant de l'oxygène (20),
- le gaz chauffé contenant de l'oxygène (20) étant également acheminé au dispositif de séparation d'oxygène (5),
- le dispositif de séparation d'oxygène (5) présentant des moyens de séparation d'oxygène (6) qui prélèvent l'oxygène du gaz chaud contenant de l'oxygène (20) et qui l'acheminent au gaz d'échappement dévié (17),
- le gaz chaud (34) de teneur en oxygène réduite quittant le dispositif de séparation d'oxygène (5),
- le gaz d'échappement dévié (25), enrichi en oxygène, ainsi qu'un carburant (31) ou un mélange de carburant et de vapeur étant acheminés au brûleur (2) et formant un mélange de combustion, qui brûle dans le brûleur (2) en formant le gaz d'échappement de combustion chaud (11) qui quitte le brûleur (2) et qui peut être utilisé comme gaz de travail chaud,
**caractérisé en ce que**
- le gaz d'échappement dévié (25), enrichi en oxygène, avant d'être acheminé au brûleur (2), est utilisé au moyen d'un échangeur de chaleur (3) pour chauffer le gaz (19) contenant de l'oxygène,
- le gaz d'échappement dévié (25), enrichi en oxygène, est acheminé au brûleur (2) au moyen d'un compresseur ou d'une soufflante (4) disposé(e) en aval de l'échangeur de chaleur (3).

2. Procédé selon la revendication 1, **caractérisé en ce que** le gaz d'échappement dévié (25), enrichi en oxygène et le gaz (19) contenant de l'oxygène traversent l'échangeur de chaleur (3) suivant le principe des contre-courants.

3. Procédé selon la revendication 1 ou 2,
**caractérisé en ce que** le gaz d'échappement dévié (17) et le gaz chauffé contenant de l'oxygène (20), traversent le dispositif de séparation d'oxygène (5) suivant le principe des co-courants.

4. Dispositif pour produire des gaz de travail chauds, en particulier pour une installation de turbine à gaz, comprenant
4.1. un brûleur (2),
4.1.1. qui est alimenté en carburant (31) ou en un mélange de carburant et de vapeur et en gaz contenant de l'oxygène (29) au niveau d'un côté d'entrée (30),
4.1.2. dans lequel un mélange de combustion de gaz contenant de l'oxygène (29) et de carburant (31) ou un mélange de carburant et de vapeur est brulé et forme un gaz d'échappement de combustion chaud (11),
4.1.3. qui est raccordé au niveau de son côté de sortie (12) à une conduite de gaz d'échappement (13), à travers laquelle le gaz d'échappement de combustion chaud (11) sort du brûleur (2) et peut être utilisé au moins en partie en tant que gaz de travail chaud,
4.2. un dispositif de séparation d'oxygène (5),
4.2.1. qui est alimenté au niveau d'une première entrée (16) en gaz d'échappement de combustion chaud (17), qui est dévié de la conduite de gaz d'échappement (13),
4.2.2. qui est alimenté au niveau d'une deuxième entrée (23) en gaz chauffé contenant de l'oxygène (20),
4.2.3. qui présente des moyens de séparation d'oxygène (6) qui transportent l'oxygène depuis le gaz chauffé contenant de l'oxygène (20) jusqu'au gaz d'échappement de combustion dévié (17),
4.2.4. qui présente une première sortie (24), de laquelle sort du gaz d'échappement de combustion enrichi en oxygène (25) pour l'alimentation du côté d'entrée (30) du brûleur (2),
4.2.5. qui présente une deuxième sortie (33), de laquelle sort le gaz chaud (34) de teneur en oxygène réduite, qui peut être utilisé comme gaz de travail chaud,
4.3. un échangeur de chaleur (3),
4.3.1. dans lequel entre du gaz relativement froid contenant de l'oxygène (19) au niveau d'une première entrée (21),
4.3.2. hors duquel, au niveau d'une première sortie (22), du gaz chauffé contenant de l'oxygène (20) sort en vue de l'alimentation de la deuxième entrée (23) du dispositif de séparation d'oxygène (5),
4.3.3. la première sortie (22) de l'échangeur de chaleur (3) étant connectée à la deuxième entrée (23) du dispositif de séparation d'oxygène (5),
**caractérisé en ce que**
- l'échangeur de chaleur (3) présente une deuxième entrée (27) qui est connectée à la première sortie (24) du dispositif de séparation d'oxygène (5),
- l'échangeur de chaleur (3) présente une deuxième sortie (28) de laquelle sort du gaz d'échappement de combustion (29) refroidi, enrichi en oxygène, pour l'alimentation du brûleur (2),
- la deuxième sortie (28) de l'échangeur de chaleur (3) est connectée par le biais d'une conduite d'alimentation (60) au côté d'entrée (30) du brûleur (2),
- un compresseur ou une soufflante (4) est disposé(e) dans cette conduite d'alimentation (60).

5. Dispositif selon la revendication 4,
**caractérisé en ce que**
l'échangeur de chaleur (3) est réalisé sous forme d'échangeur de chaleur à deux circuits et est raccordé de telle sorte que le gaz d'échappement de combustion enrichi en oxygène (25) et le gaz contenant de l'oxygène (19) traversent l'échangeur de chaleur (3) selon le principe des contre-courants.

6. Dispositif selon la revendication 4 ou 5,
**caractérisé en ce que**
le dispositif de séparation d'oxygène (5) présente une première chambre (7) et une deuxième chambre (8) et **en ce que** les moyens de séparation d'oxygène présentent une membrane (6) qui sépare l'une de l'autre les deux chambres (7, 8) et qui transporte de l'oxygène d'une chambre (8) dans l'autre chambre (7), les deux chambres (7, 8) étant orientées dans le même sens et étant parcourues parallèlement à la membrane (6).
